# EUROPEAN PATENT SPECIFICATION

(11) **EP 4 011 740 B1**
(45) Date of publication and mention of the grant of the patent: **20.12.2023**
(21) Application number: 22168668.6
(22) Date of filing: 15.04.2022
(51) Int. Cl.: B60W 60/00, B60W 40/09, B60W 30/18, B60W 50/00

(54) **METHOD AND APPARATUS FOR DETERMINING BEHAVIORAL DRIVING HABIT AND CONTROLLING VEHICLE DRIVING**
VERFAHREN UND VORRICHTUNG ZUM ERMITTELN EINES FAHRVERHALTENS UND ZUM STEUERN EINES KRAFTFAHRZEUGS
PROCÉDÉ ET DISPOSITIF POUR DÉTERMINER UN COMPORTEMENT DE CONDUITE ET POUR CONTRÔLER L'ENTRAÎNEMENT D'UN VÉHICULE

(30) Priority: 16.04.2021 CN 202110414488
(43) Date of publication of application: 15.06.2022
(73) Proprietor: Apollo Intelligent Connectivity (Beijing) Technology Co., Ltd., Beijing 100176 (CN)
(72) Inventor: CHEN, Manni, Beijing, 100176 (CN); ZHANG, Binglin, Beijing, 100176 (CN)
(74) Representative: Studio Torta S.p.A.

(56) References cited:
- WO-A1-2016/016756
- WO-A1-2016/109540
- WO-A1-2019/122951
- WO-A1-2021/019407
- US-A1- 2021 009 133

## Description

### TECHNICAL FIELD

The present invention relates to an autonomous driving technology in the field of artificial intelligence and, in particular, a method and an apparatus for determining a behavioral driving habit and controlling vehicle driving.

### BACKGROUND

Vehicles with autonomous driving capabilities are gradually being applied to actual traffic scenarios. In an autonomous driving mode, a user does not need to manipulate a vehicle, but only needs to pay attention to changes of road environment and perform a temporal takeover in some emergencies, so that the user's driving fatigue can be alleviated and the driving safety can be improved.

Currently, a unified autonomous driving strategy is employed for an autonomous driving vehicle. For example, taking a vehicle-following scenario as an example, a fixed parameter for a vehicle-following distance is set in an autonomous driving system of a vehicle. In this way, the vehicle keeps a same vehicle-following distance from a preceding vehicle during vehicle-following driving.

WO 2016/016756 A1 discloses methods for communicating a ranking characterizing a portion of a roadway include: (a) ranking at least one segment of a roadway based on an amount of deviation between a true driving behavior on the at least one segment of the roadway and an expected driving behavior predefined for the at least one segment of the roadway, and (b) communicating the ranking to a client.

WO 2021/019407 A1 discloses an automotive active lane change assist (HCLA) designed to cause a motor vehicle to carry out autonomous-driving lane change manoeuvres and to customize the autonomous-driving lane change manoeuvres based on manual-driving lane change habits of a driver of the motor vehicle learnt during one or different manual-driving sessions of the motor vehicle.

The automotive active lane change assist (HCLA) is further designed to customize the autonomous -driving lane change manoeuvres based on manual-driving lane change habits of a driver of the motor vehicle #t by determining one or different autonomous-driving lane change settings for one or different drivers of the motor vehicle and for one or different types or categories of roads along which the motor vehicle can carry out autonomous-driving lane change manoeuvres.

However, since different users have different behavioral driving habits, the unified autonomous driving strategy can hardly meet driving preferences of different users, resulting in the users' feeling that vehicles cannot be driven according to their expectations, thereby affecting user experience.

### SUMMARY

The present invention provides a method and an apparatus for determining a behavioral driving habit and controlling vehicle driving. The present invention is set out in the appended set out claims.

According to a first aspect of the present invention, provided is a method for determining a behavioral driving habit comprising the features of claim 1.

According to a second aspect of the present invention, provided is a method for controlling vehicle driving comprising the features of claim 8.

According to a third aspect of the present invention, provided is an apparatus for determining a behavioral driving habit comprising the features of claim 12.

In an aspect beyond the scope of the claims, described is an apparatus for controlling vehicle driving, including:
a receiving module, configured to receive an autonomous driving request, where the autonomous driving request includes an identifier of a user;
an acquiring module, configured to acquire an association relationship between driving parameters according to the identifier of the user, where the association relationship between the driving parameters represents a behavioral driving habit of the user;
an updating module, configured to update, according to the association relationship between the driving parameters, a driving strategy of a second vehicle to obtain a target driving strategy; and
a controlling module, configured to control the second vehicle to drive autonomously according to the target driving strategy.

### □ BRIEF DESCRIPTION OF DRAWINGS

The accompanying drawings are used to better understand the present solution, but do not constitute a limitation to the present invention. Among them:
FIG. 1 is a schematic diagram illustrating a kind of system architecture to which an embodiment of the present invention may be applicable;
FIG. 2 is a schematic diagram illustrating an application scenario to which an embodiment of the present invention may be applicable;
FIG. 3 is a schematic flowchart illustrating a method for determining a behavioral driving habit according to an embodiment of the present invention;
FIG. 4 is a schematic flowchart illustrating another method for determining a behavioral driving habit according to an embodiment of the present invention;
FIG. 5 is a schematic flowchart illustrating a method for controlling vehicle driving according to an embodiment of the present invention;
FIG. 6 is a schematic diagram illustrating a process of controlling vehicle driving according to an embodiment of the present invention;
FIG. 7 is a schematic flowchart illustrating another method for controlling vehicle driving according to an embodiment of the present invention;
FIG. 8 is a schematic structural diagram illustrating an apparatus for determining a behavioral driving habit according to an embodiment of the present invention;
FIG. 9 is a schematic structural diagram illustrating an apparatus for controlling vehicle driving according to an embodiment of the present invention; and
FIG. 10 is a schematic structural diagram illustrating an electronic device according to an embodiment of the present invention.

### □ DESCRIPTION OF EMBODIMENTS

Exemplary embodiments of the present invention will be described hereunder with reference to the accompanying drawings, which include therein various details of the embodiments of the present invention to facilitate understanding and should be considered as to be merely exemplary. Therefore, those of ordinary skill in the art should realize that various changes and modifications can be made to the embodiments described herein without departing from the scope of the present invention. Likewise, for clarity and conciseness, descriptions of well-known functions and structures are omitted in the following description.

Currently, vehicles with autonomous driving capabilities are gradually being applied to actual traffic scenarios. For example, a vehicle with navigation-assisted driving functions can autonomously drive on a highway or even an urban road according to a navigation route preset by a user, and the user only needs to pay attention to changes of road environment and perform a temporal takeover in some emergencies and on some unavailable roads. The vehicles with autonomous driving capabilities can greatly alleviate user fatigue during long-distance driving or driving on congested roads, and meanwhile improve driving safety.

As described previously, a unified autonomous driving strategy is employed for a current autonomous driving vehicle. For example, taking a vehicle-following scenario as an example, a parameter of a fixed vehicle-following distance is set in an autonomous driving system of a vehicle. In this way, the vehicle keeps a same vehicle-following distance from a preceding vehicle during vehicle-following driving. However, different users have different behavioral driving habits. Some people prefer a closer vehicle-following distance, while some people prefer a longer vehicle-following distance. Therefore, the unified autonomous driving strategy can hardly meet driving preferences of different users, resulting in the users' feeling that vehicles cannot be driven according to their expectations, thereby affecting user experience.

In some related technologies, an autonomous driving vehicle can provide a user with some autonomous driving adjustment configurations. For example, the autonomous driving adjustment configurations may include the following gears: an aggressive gear, an ordinary gear and a conservative gear. When the user selects the ordinary gear, a default autonomous driving strategy is employed for the vehicle, such as a moderate vehicle-following distance, a moderate speed, a moderate lane-changing frequency, a moderate overtaking frequency, etc. When the user selects the aggressive gear, a relatively aggressive autonomous driving strategy is employed for the vehicle, such as a relatively short vehicle-following distance, a relatively high speed, a relatively high lane-changing frequency, a relatively high overtaking frequency, etc. When the user selects the conservative gear, the vehicle is driven according to a relatively conservative autonomous driving strategy, such as a relatively long vehicle-following distance, a relatively low speed, a relatively low lane-changing frequency or no lane-changing, a relatively low overtaking frequency or no overtaking, etc.

However, there are only a few autonomous driving strategies provided in the above approaches, which still cannot meet requirements from thousands of users. In addition, the same user may have different driving preferences in different scenarios. For example, a certain user is accustomed to keeping a relatively short vehicle-following distance in a vehicle-following scenario, but does not like overtaking. Therefore, such improvement still cannot provide a true personalized driving experience.

The present invention provides a method and an apparatus for determining a behavioral driving habit and controlling vehicle driving, which are applied to an autonomous driving technology in the field of artificial intelligence so as to achieve personalized autonomous driving.

An embodiment of the present invention allows for: acquiring driving behavior-related data during a user's manual driving a vehicle on a road and map data; and then determining, according to the user's driving behavior-related data and the map data, an association relationship between driving parameters used during the user's manual driving the vehicle, where the association relationship between the driving parameters represents a behavioral driving habit of the user. Further, when the vehicle is driving autonomously, an autonomous driving strategy of the vehicle may be updated according to the association relationship between the driving parameters used during the user's manual driving the vehicle, so that the user feels that the vehicle is driven by himself/herself, thereby improving the user's personalized driving experience. That is to say, in the solution of the present invention, the autonomous driving strategy of the vehicle is adjusted according to the user's manual driving habit, so that the driving process of the vehicle is in more compliance with the driving habit of the user.

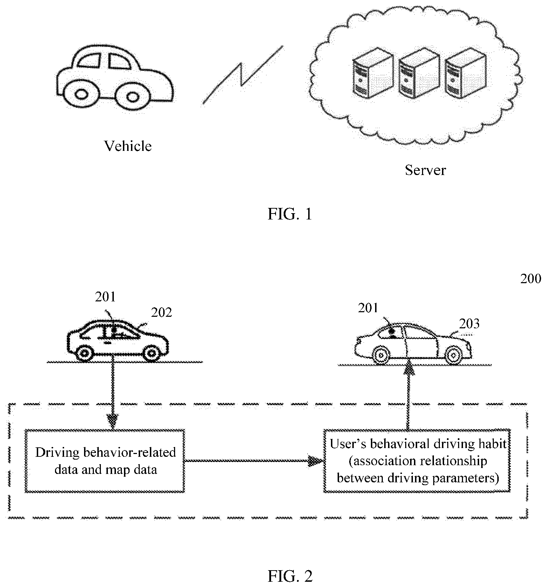

Firstly, introduction will be made hereunder in conjunction with FIG. 1 and FIG. 2 to a system architecture and an application scenario to which embodiments of the present invention may be applicable.

FIG. 1 is a schematic diagram illustrating a kind of system architecture to which an embodiment of the present invention may be applicable. As shown in FIG. 1, the system architecture includes a vehicle and a server therein. The vehicle and the server can be connected via a network. The network may be any type of network, e.g., a wired or wireless local area network, a wide area network such as the Internet, a cellular network, a satellite network, or a combination thereof. The server may be any type of server or server cluster, such as a network or cloud server, an application server, a backend server, or a combination thereof.

The vehicle may be a vehicle that can be configured in an autonomous driving mode. The vehicle may be a partially autonomous driving vehicle or a driving-assisted vehicle. The vehicle may also be a fully autonomous driving vehicle or a highly autonomous driving vehicle. In some possible embodiments, the vehicle may be at any of the following levels L1-L5. L1: assisted driving, where an autonomous driving system can sometimes help a driver to fulfill certain driving tasks, and can only help to fulfill one driving operation. The driver needs to monitor driving environment and be prepared to take over at any time. L2: partially autonomous driving, where an autonomous driving system has various functions through which both a speed and a lane can be controlled. The driver needs to monitor driving environment and be prepared to take over at any time. L3: conditionally autonomous driving, where when a condition permits, the vehicle may accomplish all driving actions and is featured with a driver reminding function. The driver does not need to monitor driving environment, who can be distracted but cannot sleep, and needs to be able to take over the vehicle at any time, so that a possibly arising situation that artificial intelligence cannot cope with can be handled immediately. L4: highly autonomous driving, which achieves fully autonomous driving in a specific scenario. There may be a driver, or may be no driver. L5: fully autonomous driving, which achieves autonomous driving in any scenario.

The server may be a data analysis server, a content server, a traffic information server, a map and point of interest server, a location server, or the like. The server may be a cloud server, also known as a cloud computing server or a cloud host, which is a host product in a cloud computing service system to overcome defects of difficult management and weak business scalability existing in a traditional physical host and a VPS service ("Virtual Private Server", or "VPS" for short). The server may also be a server of a distributed system, or a server combined with a blockchain.

FIG. 2 is a schematic diagram illustrating an application scenario to which an embodiment of the present invention may be applicable. As shown in FIG. 2, in the application scenario 200, a user 201 may collect data related to driving behavior of the user 201 and map data while driving a vehicle 202. Based on the collected data, the user's behavioral driving habit may be determined. The behavioral driving habit may provide the user 201 with a personalized driving experience when the user 201 is in autonomous driving or riding in a vehicle 203.

It is noted that, in the example shown in FIG. 2, the vehicle 203 may be, for example, an autonomous driving vehicle or a driving-assisted vehicle, and the user 201 may sit in the driver seat or the passenger seat or the rear row of the vehicle 203. The vehicle 202 and the vehicle 203 may be the same one or different vehicles.

In the conventional scheme, the vehicle 203 will follow a preset unified autonomous driving strategy during autonomous driving, or select a gear among several limited gears (for example: the aggressive gear, the ordinary gear, and the conservative gear), whereas the driving style provided in this manner cannot meet personalized driving requirements from different users. In an embodiment of the present invention, a behavioral driving habit of the user 201 is determined according to the driving behavior-related data collected by the user 201 during manual driving the vehicle 202 and the map data, and the vehicle 203 is guided to perform autonomous driving according to the behavioral driving habit of the user 201, therefore, the autonomous driving process of the vehicle 203 is rendered to be like a situation where the user 201 performs driving by himself/herself, thereby improving a driving experience of the user 201.

In an embodiment of the present invention, the behavioral driving habit of the user 201 may be expressed with an association relationship between driving parameters used during manual driving the vehicle 202 by the user 201, where the driving parameter may be a parameter from "driving behavior-related data and map data". The driving parameter may also be a parameter required in the autonomous driving strategy. The driving parameter may be, but is not limited to: a vehicle-following distance, a lane-changing frequency, a steering avoidance range, a lateral distance, horizontal control, accelerator pedal control, or brake pedal control.

Optionally, the association relationship between the driving parameters may be expressed with a functional relationship. Exemplarily, in an embodiment of the present invention, the association relationship between the driving parameters that are used when the user 201 is driving the vehicle 202 manually may include:
vehicle-following distance=a*speed + h*congestion level

In this way, in a vehicle-following scenario of the vehicle 203, a vehicle-following distance may be determined according to a speed of the vehicle 203 and a congestion level in the current scenario. Furthermore, vehicle-following traveling of the vehicle is controlled according to the vehicle-following distance.

In the application scenario shown in FIG. 2, the vehicle 203 may be a fully autonomous driving vehicle or a highly autonomous driving vehicle. If the vehicle 203 is a partially autonomous driving vehicle or a driving-assisted vehicle, the user 201 may be the driver of the vehicle. If the vehicle 203 is a fully autonomous driving vehicle or a highly autonomous driving vehicle, the user 201 may be a passenger of the vehicle 203, and the user 201 may sit in the driver seat, the passenger seat or the rear seat of the vehicle.

The technical solution of the present invention will be described in detail hereunder in conjunction with several specific embodiments. The following embodiments may be combined with each other, and descriptions for the same or similar content may be omitted in some embodiments.

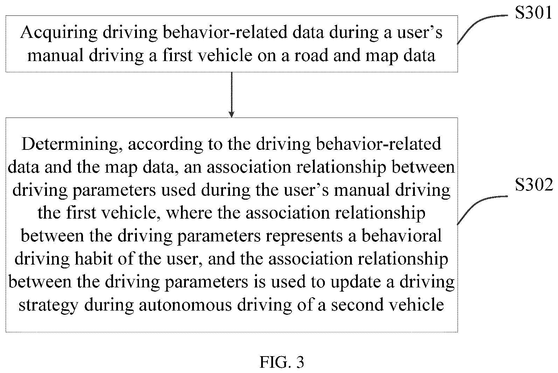

FIG. 3 is a schematic flowchart illustrating a method for determining a behavioral driving habit according to an embodiment of the present invention. The method in the present embodiment may be executed by a vehicle, for example, may be executed by an on-board unit or a vehicle-mounted device. The method in the present embodiment can also be executed by a server. As shown in FIG. 3, the method in the present embodiment includes the following steps.

S301: acquiring driving behavior-related data during a user's manual driving a first vehicle on a road and map data.

The driving behavior-related data may include: behavioral driving information and vehicle status information under the driving behavior. The behavioral driving information refers to the user's manipulation over the first vehicle, including but not limited to: horizontal control, accelerator pedal control, brake pedal control, etc. Information about the user's manipulation over the first vehicle may be collected by a sensor installed in a unit associated with the first vehicle. For example, information about the horizontal control may be obtained by measuring a torque of the steering wheel; information about the accelerator pedal control may be obtained by measuring an opening degree of the gas pedal; and information about the brake pedal control may be obtained by measuring an opening degree of the brake pedal.

The vehicle status information refers to information for describing driving status of the first vehicle, including but not limited to: a distance to a preceding vehicle (a distance between the first vehicle and the preceding vehicle), a lateral distance (a distance between the first vehicle and a side vehicle), a speed of the first vehicle, an acceleration of the first vehicle, a location of the first vehicle, etc. The vehicle status information may be collected by a sensor installed in a unit associated with the first vehicle. For example, the distance to the preceding vehicle and the lateral distance may be collected by millimeter wave radar and/or a camera. The acceleration of the first vehicle may be collected by an acceleration sensor, and the location of the first vehicle may be collected by a positioning apparatus. The speed of the first vehicle may be obtained by reading data from a dashboard.

The map data refers to data related to road and road condition that may be acquired through a high-precision map. Road-related data includes, but is not limited to: a lane where a vehicle is located, road curvature, slope, speed limit and other information. Road condition information includes, but is not limited to: traffic volume on a road, congestion level, etc.

In some implementations, it is possible to acquire driving behavior-related data during a user's manual driving one vehicle and map data, and to acquire driving behavior-related data during users' manual driving more vehicles and map data.

S302: determining, according to the driving behavior-related data and the map data, an association relationship between driving parameters used during the user's manual driving the first vehicle, where the association relationship between the driving parameters represents a behavioral driving habit of the user, and the association relationship between the driving parameters is used to update a driving strategy during autonomous driving of a second vehicle.

Specifically, the association relationship between the driving parameters used during the user's manual driving the first vehicle is obtained by learning the aforementioned driving behavior-related data and the map data. It should be noted that a specific learning process is not limited in the present embodiment. For several possible implementations, reference may be made to the detailed description of the subsequent embodiments.

It was discovered during implementation of the present invention that a user's behavioral driving habit is generally associated with road environment. For example, for the same user, a vehicle-following distance in a relatively congested scenario is usually different from that in a relatively unobstructed scenario. Therefore, in the present embodiment, at the time of learning the user's behavioral driving habit, not only the driving behavior-related data is taken into consideration, but also the map data is taken into consideration. Since the map data indicates information about environment of a road on which the first vehicle is driving, the accuracy of the user's determined behavioral driving habit is ensured by learning the driving behavior-related data and the map data.

The driving parameter in the present embodiment is a parameter from "driving behavior-related data and map data". The driving parameter is also a parameter required in the autonomous driving strategy. The driving parameter may be, but is not limited to: a vehicle-following distance, a lane-changing frequency, a steering avoidance range, a lateral distance, horizontal control, accelerator pedal control, or brake pedal control.

In a possible implementation, it is possible to determine at least one target driving parameter according to the autonomous driving strategy. The target driving parameter may be a driving parameter required in the autonomous driving strategy. Then, a driving parameter relationship corresponding to the respective target driving parameter according to the driving behavior-related data and the map data is determined.

A driving parameter relationship corresponding to one target driving parameter includes the target driving parameter, at least one reference driving parameter corresponding to the target driving parameter and a relationship between the target driving parameter and the at least one reference driving parameter. In other words, a driving parameter relationship corresponding to one target driving parameter may be expressed with a functional relationship.

Exemplarily, an example is taken by using a target driving parameter as a "vehicle-following distance", a driving parameter relationship corresponding to the "vehicle-following distance" determined in an embodiment of the present invention may be:
vehicle-following distance=*a**speed + *b**congestion level

In this way, when an autonomous driving mode is used for the second vehicle, the autonomous driving strategy of the second vehicle may be updated according to the driving parameter relationship corresponding to the respective target driving parameter. For example, when the user subsequently rides in the vehicle 203 in the autonomous driving mode, in a vehicle-following scenario of the vehicle 203, a vehicle-following distance may be determined according to a speed of the vehicle 203 and a congestion level of the current road. Furthermore, vehicle-following driving of the second vehicle is controlled according to the vehicle-following distance, so that the user feels that the vehicle-following driving is performed by himself/herself, thereby being enabled to improve a personalized driving experience of the user.

It should be understood that in the present embodiment, the user's behavioral driving habit is expressed with the association relationship (for example, a functional relationship) between the driving parameters. For example, using the vehicle-following distance as an example, the vehicle-following distance determined in the present embodiment is represented by the function "vehicle-following distance=*a**speed + *b**congestion level". It can be seen that the vehicle-following distance determined in the present embodiment is not a fixed value, but a value determined upon calculation from the speed and the congestion level. That is to say, the vehicle-following distance determined in the present embodiment is associated with road environment. Understandably, even the same user may be accustomed to using different vehicle-following distances under different road environments (for example, under different speeds or different congestion levels). Therefore, in the present embodiment, the relationship between the driving parameters is used to describe the user's behavioral driving habit, so that the determined behavioral driving habit is more accurate.

When the execution subject for the present embodiment is a vehicle, the vehicle as the execution subject may be the vehicle 202 in FIG. 2. For example, the vehicle 202 collects its own driving behavior-related data during manual driving, and acquires map data from a server. The vehicle 202 determines, according to the aforementioned driving behavior-related data and the map data, an association relationship between driving parameters used during a user's manual driving the vehicle. Furthermore, the vehicle 202 may store the user's identifier and the relationship between the driving parameters into a database. In this way, when the user rides in the autonomous driving vehicle 203, the association relationship between the driving parameters may be acquired from the database according to the user's identifier, and an autonomous driving strategy of the vehicle 203 may be updated based on the relationship between the driving parameters. In this case, the above-described first vehicle is the vehicle 202, and the above-described second vehicle is the vehicle 203. That is to say, the first vehicle and the second vehicle is not the same one.

When the execution subject for the present embodiment is a vehicle, the vehicle may also be the vehicle 203 in FIG. 2. For example, the vehicle 203 collects its own driving behavior-related data during manual driving and stores the same into a database. The vehicle 203 may acquire the driving behavior-related data from the database. The vehicle 203 may also acquire map data from a server. Furthermore, the vehicle 203 determines, according to the aforementioned driving behavior-related data and the map data, an association relationship between driving parameters used during a user's manual driving the vehicle. Furthermore, when the user rides in the autonomous driving vehicle 203, an autonomous driving strategy of the vehicle 203 may be updated according to the association relationship between the driving parameters that correspond to the user. In this case, both the above-described first vehicle and the above-described second vehicle are the vehicle 203. That is to say, the first vehicle and the second vehicle is the same one.

When the execution subject for the present embodiment is a server, the vehicle 202 collects its own driving behavior-related data during manual driving, and transmits the collected data to the server. The server acquires corresponding map data, and determines, according to the aforementioned driving behavior-related data and the map data, an association relationship between driving parameters used during a user's manual driving the vehicle 202. Furthermore, the server may also push the association relationship between the driving parameters that correspond to the user to the vehicle 203. Alternatively, when the user rides in the vehicle 203, the vehicle 203 may request from the server to acquire the association relationship between the driving parameters corresponding to the user according to the user's identifier. Furthermore, the vehicle 203 updates an autonomous driving strategy according to the association relationship between the driving parameters that correspond to the user. In this case, the above-described first vehicle is the vehicle 202, and the above-described second vehicle is the vehicle 203. That is to say, the first vehicle and the second vehicle is not the same one.

The method for determining a behavioral driving habit according to the present embodiment includes: acquiring driving behavior-related data during a user's manual driving a first vehicle on a road and map data; and determining, according to the driving behavior-related data and the map data, an association relationship between driving parameters used during the user's manual driving the first vehicle; where the association relationship between the driving parameters represents a behavioral driving habit of the user. In the above process, the behavioral driving habit of the user may be identified by learning the driving behavior-related data during the user's manual driving the first vehicle and the map data, furthermore, an autonomous driving strategy of a second vehicle may be updated according to the behavioral driving habit of the user, so that the autonomous driving process of the second vehicle is rendered to be like a situation where the user performs driving by himself/herself, thereby improving a driving experience of the user and meeting personalized autonomous driving requirements from different users.

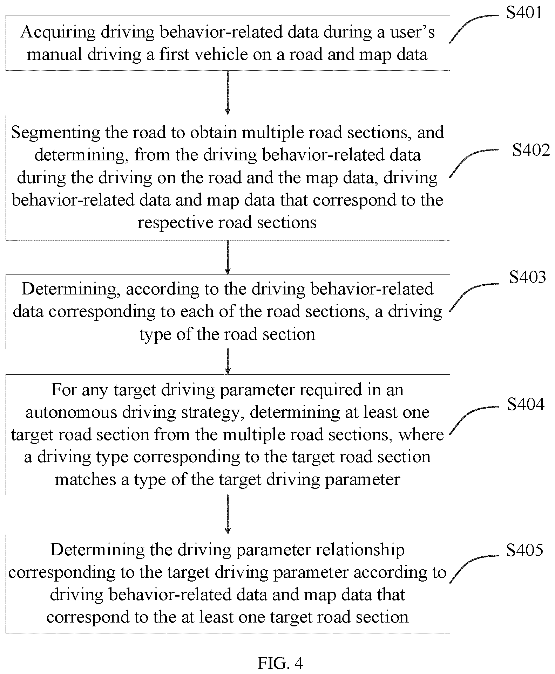

FIG. 4 is a schematic flowchart illustrating another method for determining a behavioral driving habit according to an embodiment of the present invention. The present embodiment provides a detailed description of the embodiment shown in FIG. 3. As shown in FIG. 4, the method in the present embodiment includes the following steps.

S401: acquiring driving behavior-related data during a user's manual driving a first vehicle on a road and map data.

It should be understood that S401 may be implemented in a manner similar to that for S301 in FIG. 3, details for which will not be described here again.

S402: segmenting the road to obtain multiple road sections, and determining, from the driving behavior-related data during the driving on the road and the map data, driving behavior-related data and map data that correspond to the respective road sections.

In a possible implementation, the road may be segmented according to road section information of the road in a map to obtain multiple road sections. Exemplarily, each road section may have a length of 200 meters, or each road section may have a length of 1 kilometer. In another possible implementation, the driving behavior-related data may also be mapped to a map, and then driving trajectories of the first vehicle may be combined and segmented according to road section information of the road on the map and a change of driving status of the first vehicle to obtain multiple road sections. In this way, after the road is divided into the multiple road sections, driving behavior-related data and map data that correspond to each road section may be obtained.

In a possible implementation, after S402, the method may further include: for any road section of the multiple road sections, determining, according to driving behavior-related data and map data that correspond to the road section, whether the user has a preset dangerous driving behavior in the road section, where the preset dangerous driving behavior includes, but is not limited to: sudden braking, sharp turning, speeding, peccancy driving, or the like. If there is the preset dangerous behavior, the driving behavior-related data and the map data that correspond to the road section should be deleted. Therefore, the data corresponding to the road section is prevented from being involved in a subsequent learning process, thereby ensuring the safety of a subsequently learned behavioral driving habit of the user.

S403: determining, according to the driving behavior-related data corresponding to each of the road sections, a driving type of the road section.

In the present embodiment, the driving type of the road section is divided into two: one is the user manipulation type, that is, the user actively initiates a change in driving status; and the other is the driving maintenance type, that is, the first vehicle is maintained in stable driving status.

In a possible implementation, the following feasible ways may be used to determine the driving type of the road section: determining, according to the driving behavior-related data corresponding to the road section, whether the first vehicle has a preset driving behavior in the road section, where the preset driving behavior includes, but is not limited to: lane-changing, overtaking, turning, braking, or the like. If there is aforementioned preset driving behavior, it is determined that the driving type of the road section is the user manipulation type; if there is no aforementioned preset driving behavior, it is determined that the driving type of the road section is the driving maintenance type.

S404: for any target driving parameter required in an autonomous driving strategy, determining at least one target road section from the multiple road sections, where a driving type corresponding to the target road section matches a type of the target driving parameter.

A type of each target driving parameter is the user manipulation type or the driving maintenance type.

Exemplarily, the target driving parameter pertaining to the user manipulation type may be, but is not limited to: a driving parameter related to lane-changing, turning, overtaking or braking. The target driving parameter pertaining to the driving maintenance type may be, but is not limited to: a vehicle-following distance, a vehicle-following speed, or a lateral distance.

S405: determining a driving parameter relationship corresponding to the target driving parameter according to driving behavior-related data and map data that correspond to the at least one target road section.

In other words, if a type of a certain target driving parameter is the user manipulation type, determining, from the multiple road sections, target road sections whose driving type is the user manipulation type, and determining, according to driving behavior-related data and map data that correspond to these target road sections, a driving parameter relationship corresponding to the target driving parameter. If a type of a certain target driving parameter is the driving maintenance type, determining, from the multiple road sections, target road sections whose driving type is the driving maintenance type, and determining, according to driving behavior-related data and map data that correspond to these target road sections, a driving parameter relationship corresponding to the target driving parameter.

A driving parameter relationship corresponding to a target driving parameter includes the target driving parameter, at least one reference driving parameter corresponding to the target driving parameter and a relationship between the target driving parameter and the at least one reference driving parameter.

In a possible implementation, both the at least one reference driving parameter corresponding to the target driving parameter and the relationship between the target driving parameter and the at least one reference driving parameter may be obtained through a learning process. For example, taking "vehicle-following distance=a*speed + *b**congestion level" in the above example as an example, the reference driving parameters in the functional relationship, i.e., "speed" and "congestion level", and a relationship (that is, the aforementioned functional relationship) between "vehicle-following distance" and the reference driving parameters are obtained through learning.

Exemplarily, S405 may be implemented in the following manner: extracting, from the driving behavior-related data and the map data that correspond to each target road section, a value of the target driving parameter; and determining, according to the value of the target driving parameter and a value of a further driving parameter from the target road section, a relationship between the target driving parameter and the further driving parameter from the target road section; further, determining the driving parameter relationship corresponding to the target driving parameter according to the relationship determined from the at least one target road section

It should be understood that for different users, the driving parameter relationship learned in this manner may have completely different expression forms. For example, there may be a linear function for some users; there may be a non-linear function for some other users.

In another possible implementation, at least one reference driving parameter corresponding to the target driving parameter may be determined first, e.g., may be obtained through pre-learning or statistically obtained in advance. Then, a relationship between the target driving parameter and the at least one reference driving parameter is obtained through learning. For example, taking "vehicle-following distance= *a** speed + *b**congestion level" in the above example as an example, the reference driving parameters in the functional relationship, i.e., "speed" and "congestion level", may be determined prior to learning, and a relationship (that is, the aforementioned functional relationship) between "vehicle-following distance" and the reference driving parameters is obtained through learning.

Exemplarily, S405 may be implemented in the following manner: determining at least one reference driving parameter corresponding to the target driving parameter; extracting, from the driving behavior-related data and the map data that correspond to each target road section, a value of the target driving parameter and a value of the at least one reference driving parameter; determining a relationship between the target driving parameter and the at least one reference driving parameter according to the value of the target driving parameter and the value of the at least one reference driving parameter; and determining the driving parameter relationship corresponding to the target driving parameter according to the relationship determined from the at least one target road section.

In the present embodiment, in order to ensure the accuracy of the learned behavioral driving habit of the user, in a possible implementation, after S405, the method may further include:
if a behavioral driving habit represented by a driving parameter relationship corresponding to a first target driving parameter has a safety less than a preset threshold, deleting the driving parameter relationship corresponding to the first target driving parameter, or processing the driving parameter relationship corresponding to the first target driving parameter to enable a driving behavior habit represented by a processed driving parameter relationship corresponding to the first target driving parameter to have a safety greater than or equal to the preset threshold, where the first target driving parameter is any one of the at least one target driving parameter.

Exemplarily, if the driving parameter relationship corresponding to the "vehicle-following distance" determined through the aforementioned S401 to S405 indicates that the user is accustomed to keeping a very short distance to a preceding vehicle, then the driving parameter relationship corresponding to the "vehicle-following distance" may be deleted, or the driving parameter relationship corresponding to the "vehicle-following distance" may be processed. For example, a safety factor may be added to "vehicle-following distance=*a**speed + *b**congestion level" to avoid the determined vehicle-following distance being too close, thereby ensuring the safety of autonomous driving.

Optionally, a preset safety criterion model may be used to detect and process safety of a behavioral driving habit indicated by the driving parameter relationship corresponding to the target driving parameter. The safety criterion model is a standardized safety model based on performance of a vehicle per se and driving benchmarks. With the safety criterion model, over-aggressive operations, illegal operations, harmful operations and other behavioral driving habits may be identified, and an identified dangerous driving behavior is filtered or optimized to ensure safety. The safety criterion model may help an autonomous driving vehicle in quickly identifying a dangerous situation during normal driving, and give a driving proposal with maximum safety.

In another possible implementation, after S405, the method may further include:
if the driving parameter relationship corresponding to the first target driving parameter is exclusive of a preset reference driving parameter, processing the driving parameter relationship corresponding to the first target driving parameter with a preset model to enable a processed driving parameter relationship to be inclusive of the preset reference driving parameter and a relationship between the first target driving parameter and the preset reference driving parameter, where the first target driving parameter is any one of the at least one target driving parameter.

Exemplarily, if the learned driving parameter relationship does not contain the relationship between the first target driving parameter and the preset reference driving parameter since some specific scenarios do not exist in the collected manual driving data. In order to ensure that the learned behavioral driving habit of the user can be applied to a wider range of scenarios, the relationship between the first target driving parameter and the preset reference driving parameter may be supplemented in the driving parameter relationship.

The aforementioned preset model may be a driving knowledge model. The driving knowledge model is a set of mathematical and semantic model in compliance with safety criteria, which is generated by combining gathered behavioral data of a vehicle which is driven manually normally with a preset rule. Through a function judgment or a semantic instruction output, it can provide an autonomous driving vehicle with a judgment and an instruction for a safety-guaranteed driving operation in a scenario where there is no clear indication in legal traffic regulations. When the vehicle encounters an emergency during normal driving, the vehicle's driving knowledge model will guide the autonomous driving system to perform accident avoidance or minimize accident damage. The driving parameter relationship optimized through the safety criterion model can expand the scenario corresponding to the user's behavioral driving habit, so that personalized driving can be applied in a wider range of scenarios.

In the present embodiment, the safety criterion model and the driving knowledge model may also be used in combination. For example, the safety criterion model is used first to process a behavioral driving habit of the user, and then the driving knowledge model is used to process the behavioral driving habit of the user, and finally a behavioral driving habit of the user which meets the safe driving criteria and is applicable to a wider range of scenarios is obtained. By adopting the safety criterion model and the driving knowledge model, the safety of autonomous driving can be put first, and meanwhile personalized autonomous driving can be expanded with regard to its application scenario, so that the personalized autonomous driving is applied more comprehensively.

The method for determining a behavioral driving habit of a user has been described in the foregoing embodiments. The following, in conjunction with a specific embodiment, will give a description to a method for implementing personalized autonomous driving according to a user's behavioral driving habit.

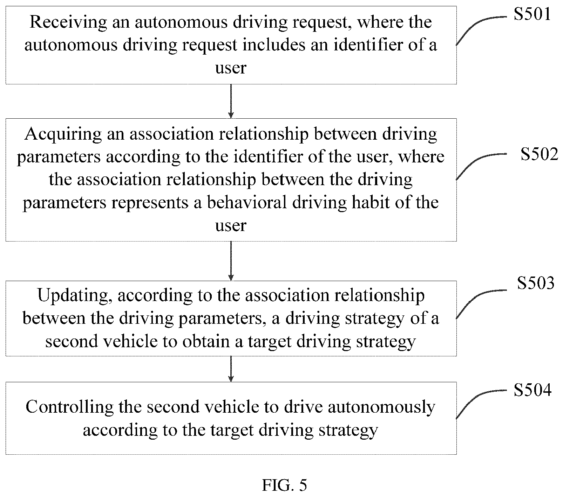

FIG. 5 is a schematic flowchart illustrating a method for controlling vehicle driving according to an embodiment of the present invention. The execution subject for the present embodiment may be the vehicle 203 in FIG. 2. As shown in FIG. 5, the method in the present embodiment may include the following steps.

S501: receiving an autonomous driving request, where the autonomous driving request includes an identifier of a user.

In some examples, when a user needs to use a second vehicle in an autonomous driving mode, an autonomous driving request may be input to the second vehicle. The user's identifier (such as a user account) is carried in the autonomous driving request.

S502: acquiring, an association relationship between driving parameters according to the identifier of the user, where the association relationship between the driving parameters represents a behavioral driving habit of the user.

It should be understood that the association relationship between the driving parameters may be obtained by learning according to driving behavior-related data during the user's manual driving a first vehicle on a road and map data. For a specific learning process, reference may be made to the detailed descriptions of the embodiments shown in FIG. 3 or FIG. 4.

In some possible scenarios, the association relationship between the driving parameters is stored in a server. The second vehicle may transmit a behavioral driving habit acquisition request to the server, where the behavioral driving habit acquisition request includes the identifier of the user. The server transmits to the second vehicle the association relationship between the driving parameters corresponding to the identifier of the user. Thus, the second vehicle acquires the association relationship between the driving parameters corresponding to the user.

S503: updating, according to the association relationship between the driving parameters, a driving strategy of a second vehicle to obtain a target driving strategy.

Optionally, the association relationship between the driving parameters includes a driving parameter relationship corresponding to at least one target driving parameter. A driving strategy of a second vehicle may be updated according to a driving parameter relationship corresponding to each target driving parameter.

Specifically, for each target driving parameter, if the driving strategy of the second vehicle includes the target driving parameter, substituting a value of the target driving parameter in the driving strategy of the second vehicle with a driving parameter relationship corresponding to the target driving parameter. For example, if a vehicle-following distance in the driving strategy of the second vehicle is set to a fixed value of 4 meters, then the value of the vehicle-following distance in the driving strategy is substituted with "vehicle-following distance=a*speed + *b**congestion level".

If the driving strategy of the second vehicle does not include the target driving parameter, the driving parameter relationship corresponding to the target driving parameter is added to the driving strategy of the second vehicle. For example, if the driving strategy of the second vehicle does not include a parameter of lane-changing frequency, while a learned behavioral driving habit of the user includes lane-changing under the situation that a traffic volume is relative high (that is, including a relationship between a lane-changing frequency and a traffic volume), then a driving parameter relationship corresponding to the lane-changing frequency may be added to the driving strategy of the second vehicle.

S504: controlling the second vehicle to drive autonomously according to the target driving strategy.

In the present embodiment, the driving strategy of the second vehicle is updated, and the obtained target driving strategy includes a driving parameter relationship corresponding to at least one target driving parameter, where a driving parameter relationship corresponding to one target driving parameter includes the target driving parameter, at least one reference driving parameter corresponding to the target driving parameter and a relationship between the target driving parameter and the at least one reference driving parameter.

In this way, S504 may specifically include: acquiring a value of the at least one reference driving parameter corresponding to the target driving parameter according to real-time driving data of the second vehicle and map data; determining a value of the target driving parameter according to the value of the at least one reference driving parameter and the relationship between the target driving parameter and the at least one reference driving parameter; and controlling the second vehicle to drive autonomously according to the value of the target driving parameter.

For example, the driving parameter relationship corresponding to the target driving parameter "vehicle-following distance" is "vehicle-following distance=a*speed + *b**congestion level". In a vehicle-following scenario of the second vehicle, according to the aforementioned functional relationship, a vehicle-following distance may be obtained upon calculation based on a real-time speed of the second vehicle and a real-time congestion level of the road, and further the second vehicle is controlled according to the vehicle-following distance.

The method for controlling vehicle driving according to the present embodiment includes: receiving an autonomous driving request, where the autonomous driving request includes an identifier of a user; acquiring an association relationship between driving parameters according to the identifier of the user, where the association relationship between the driving parameters represents a behavioral driving habit of the user; updating, according to the association relationship between the driving parameters, a driving strategy of a vehicle, e.g. the above-described second vehicle, to obtain a target driving strategy; and controlling the vehicle to drive autonomously according to the target driving strategy. In the above process, the driving strategy of the vehicle is updated according to the association relationship between the driving parameters that represents the user's behavioral driving habit, so that the vehicle can drive autonomously according to the user's behavioral driving habit, that is, the autonomous driving process of the vehicle is rendered to be like a situation where the user performs driving by himself/herself, thereby improving a driving experience of the user and achieving personalized autonomous driving of different users.

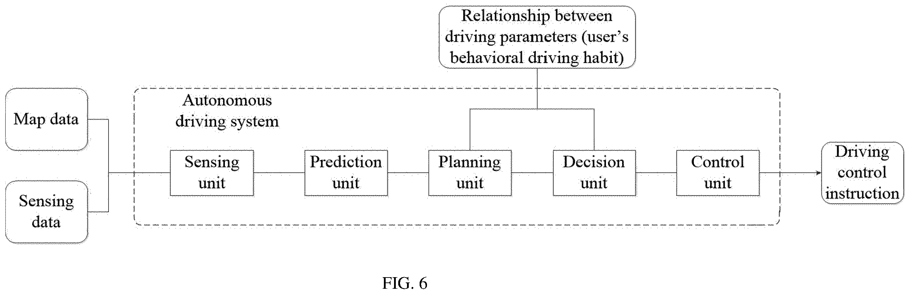

FIG. 6 is a schematic diagram illustrating a process of controlling vehicle driving according to an embodiment of the present invention. As shown in FIG. 6, an autonomous driving system of a vehicle includes: a sensing unit, a prediction unit, a planning unit, a decision unit and a control unit. The sensing unit obtains a surrounding obstacle information and road environment information through data collected by a camera, radar, a map, or the like. The prediction unit infers a future possible behavior pattern of the obstacle according to the obstacle information and the road environment information that are sensed. The planning unit and the decision unit generate driving route information and driving decision information by analyzing the information that is sensed and predicted. The control unit converts the driving decision information into a braking signal, an accelerating signal or a steering signal, and controls the vehicle to drive as expected.

In the present embodiment, after acquiring an association relationship between driving parameters, the vehicle will update the autonomous driving system according to the association relationship between the driving parameters. As shown in FIG. 6, the planning unit and the decision unit of the autonomous driving system will receive the association relationship between the driving parameters. The planning unit and the decision unit will update original autonomous driving strategy in a form of overwriting original driving parameters and/or newly adding driving parameters, so that there is an updated target driving strategy in the autonomous driving system. Furthermore, when performing planning or decision-making, the autonomous driving system controls the vehicle according to the updated target driving strategy.

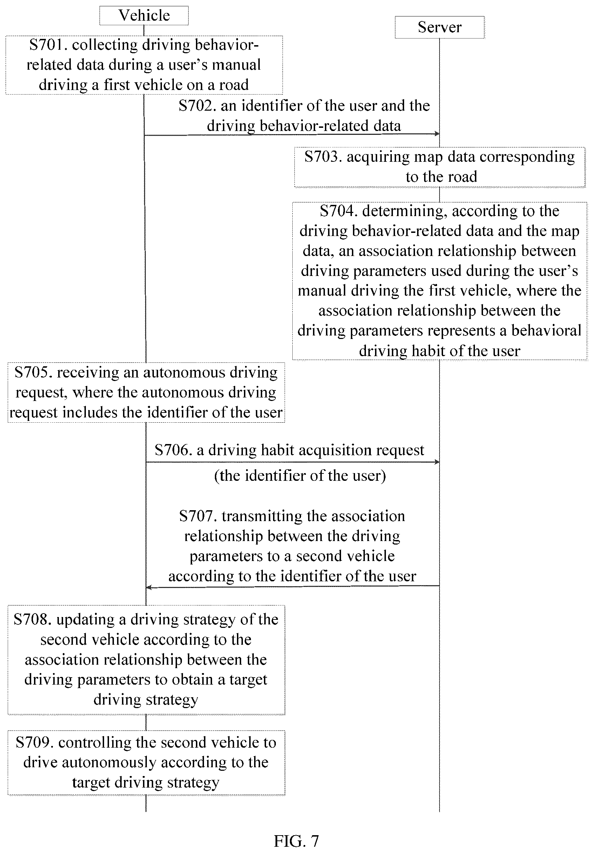

FIG. 7 is a schematic flowchart illustrating another method for controlling vehicle driving according to an embodiment of the present invention. The method of the present embodiment may be implemented through an interaction between a second vehicle and a server. As shown in FIG. 7, the method of the present embodiment includes the following steps.

S701: the first vehicle collects driving behavior-related data during a user's manual driving the first vehicle on a road.

S702: the first vehicle transmits an identifier of the user and the driving behavior-related data to the server.

S703: the server acquires map data corresponding to the road.

S704: the server determines, according to the driving behavior-related data and the map data, an association relationship between driving parameters used during the user's manual driving the first vehicle, where the association relationship between the driving parameters represents a behavioral driving habit of the user.

It should be understood that for a specific implementation of S701 to S704, reference may be made to the embodiments shown in FIG. 3 or FIG. 4.

S705: a second vehicle receives an autonomous driving request, where the autonomous driving request includes the identifier of the user.

S706: the second vehicle transmits a behavioral driving habit acquisition request to the server, where the behavioral driving habit acquisition request includes the identifier of the user.

S707: the server transmits the association relationship between the driving parameters to the second vehicle according to the identifier of the user.

S708: the second vehicle updates a driving strategy of the second vehicle according to the association relationship between the driving parameters to obtain a target driving strategy.

S709: the second vehicle is controlled by the second vehicle to drive autonomously according to the target driving strategy.

It should be understood that for a specific implementation of S705 to S709, reference may be made to the embodiment shown in FIG. 5.

In the present embodiment, the first vehicle in S701 to S704 may be the same vehicle as or a different vehicle from the second vehicle in S705 to S709,

In the present embodiment, the behavioral driving habit of the user may be identified by learning the driving behavior-related data during the user's manual driving the first vehicle and the map data, furthermore, the autonomous driving strategy of the second vehicle is updated according to the behavioral driving habit of the user, so that the autonomous driving process of the second vehicle is rendered to be like a situation where the user performs driving by himself/herself, thereby improving a driving experience of the user and achieving personalized autonomous driving of different users.

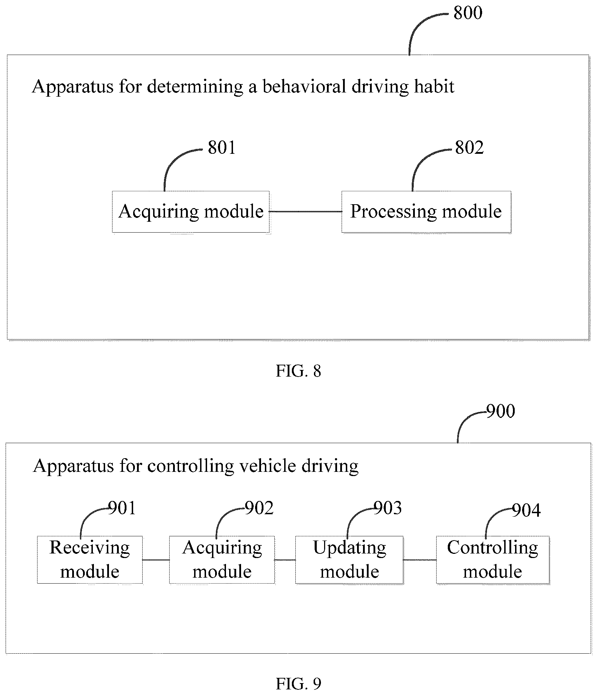

FIG. 8 is a schematic structural diagram illustrating an apparatus for determining a behavioral driving habit according to an embodiment of the present invention. The apparatus in the present embodiment may be in a form of software and/or hardware. The apparatus may be provided in a vehicle, for example, the apparatus may be provided in an on-board unit or in a vehicle-mounted device. The apparatus may also be provided in a server.

As shown in FIG. 8, an apparatus 800 for determining a behavioral driving habit according to the present embodiment includes: an acquiring module 801 and a processing module 802.

The acquiring module 801 is configured to acquire driving behavior-related data during a user's manual driving a first vehicle on a road and map data.

The processing module 802 is configured to determine, according to the driving behavior-related data and the map data, an association relationship between driving parameters used during the user's manual driving the first vehicle, where the association relationship between the driving parameters represents a behavioral driving habit of the user, and the association relationship between the driving parameters is used to update a driving strategy during autonomous driving of a second vehicle.

The processing module 802 includes:
a first determining unit, configured to determine at least one target driving parameter according to the driving strategy; and
a second determining unit, configured to determine a driving parameter relationship corresponding to the respective target driving parameter according to the driving behavior-related data and the map data;
where a driving parameter relationship corresponding to one target driving parameter includes the target driving parameter, at least one reference driving parameter corresponding to the target driving parameter and a relationship between the target driving parameter and the at least one reference driving parameter.

The road includes multiple road sections, and a type of each of the driving parameters is a user manipulation type or a driving maintenance type; the second determining unit includes:
a first determining subunit, configured to determine, for any target driving parameter of the at least one target driving parameter, at least one target road section from the multiple road sections, where a driving type corresponding to the target road section matches a type of the target driving parameter; and
a second determining subunit, configured to determine a driving parameter relationship corresponding to the target driving parameter according to driving behavior-related data and map data that correspond to the at least one target road section.

In a possible implementation, the second determining subunit is specifically configured to:
extract, from driving behavior-related data and map data that correspond to each target road section, a value of the target driving parameter, and determine, according to the value of the target driving parameter and a value of a further driving parameter from the target road section, a relationship between the target driving parameter and the further driving parameter from the target road section; and
determine the driving parameter relationship corresponding to the target driving parameter according to the relationship determined from the at least one target road section.

In a possible implementation, the second determining subunit is specifically configured to:
determine at least one reference driving parameter corresponding to the target driving parameter;
extract, from the driving behavior-related data and the map data that correspond to each target road section, a value of the target driving parameter and a value of the at least one reference driving parameter corresponding to the target driving parameter, and determine a relationship between the target driving parameter and the at least one reference driving parameter according to the value of the target driving parameter and the value of the at least one reference driving parameter corresponding to the target driving parameter; and
determine the driving parameter relationship corresponding to the target driving parameter according to the relationship determined from the at least one target road section.

In a possible implementation, the second determining unit further includes:
a segmenting subunit, configured to segment the road to obtain the multiple road sections;
a third determining subunit, configured to determine, from the driving behavior-related data during the driving on the road and the map data, driving behavior-related data and map data that correspond to the respective road sections; and
a fourth determining subunit, configured to determine, according to the driving behavior-related data corresponding to each of the road sections, a driving type of the road section.

In a possible implementation, the fourth determining subunit is specifically configured to:
determine, according to the driving behavior-related data corresponding to the road section, whether the vehicle has a preset driving behavior in the road section, where the preset driving behavior includes at least one of: lane-changing, overtaking, turning and braking;
if yes, determine that the driving type of the road section is the user manipulation type; and
if no, determine that the driving type of the road section is the driving maintenance type.

In a possible implementation, the second determining unit further includes:
a deleting subunit, configured to determine for any road section of the multiple road sections, according to driving behavior-related data and map data that correspond to the road section, whether the user has a preset dangerous driving behavior in the road section; and if yes, delete the driving behavior-related data and the map data that correspond to the road section.

In a possible implementation, the processing module 802 further includes a processing unit configured to:
if a behavioral driving habit represented by a driving parameter relationship corresponding to a first target driving parameter has a safety less than a preset threshold, delete the driving parameter relationship corresponding to the first target driving parameter, or process the driving parameter relationship corresponding to the first target driving parameter to enable a driving behavior habit represented by a processed driving parameter relationship corresponding to the first target driving parameter to have a safety greater than or equal to the preset threshold; or,
if the driving parameter relationship corresponding to the first target driving parameter is exclusive of a preset reference driving parameter, process the driving parameter relationship corresponding to the first target driving parameter with a preset model to enable a processed driving parameter relationship corresponding to the first target driving parameter to be inclusive of the preset reference driving parameter and a relationship between the first target driving parameter and the preset reference driving parameter;
where the first target driving parameter is any one of the at least one target driving parameter.

The apparatus provided in the present embodiment can be used to implement the method for determining a behavioral driving habit in the aforementioned method embodiments; implementation principles and technical effects therebetween are similar, and details will not be described here again.

FIG. 9 is a schematic structural diagram illustrating an apparatus for controlling vehicle driving according to an embodiment of the present invention. The apparatus in the present embodiment may be in a form of software and/or hardware. The apparatus may be provided in a vehicle, for example, the apparatus may be provided in an on-board unit or in a vehicle-mounted device. As shown in FIG. 9, an apparatus 900 for controlling vehicle driving according to the present embodiment includes: a receiving module 901, an acquiring module 902, an updating module 903 and a controlling module 904.

The receiving module 901 is configured to receive an autonomous driving request, where the autonomous driving request includes an identifier of a user.

The acquiring module 902 is configured to acquire an association relationship between driving parameters according to the identifier of the user, where the association relationship between the driving parameters represents a behavioral driving habit of the user.

The updating module 903 is configured to update, according to the association relationship between the driving parameters, a driving strategy of the vehicle to obtain a target driving strategy.

The controlling module 904 is configured to control the vehicle to drive autonomously according to the target driving strategy.

In a possible implementation, the association relationship between the driving parameters includes: a driving parameter relationship corresponding to at least one target driving parameter; and the updating module 903 includes:
a substituting unit, configured to substitute, for any target driving parameter of the at least one target driving parameter, a value of the target driving parameter in the driving strategy of the vehicle with a driving parameter relationship corresponding to the target driving parameter.
In a possible implementation, a driving parameter relationship corresponding to one target driving parameter includes the target driving parameter, at least one reference driving parameter corresponding to the target driving parameter and a relationship between the target driving parameter and the at least one reference driving parameter;
the controlling module 904 includes:
   an acquiring unit, configured to acquire a value of the at least one reference driving parameter corresponding to the target driving parameter according to real-time driving data of the vehicle and map data;
   a determining unit, configured to determine a value of the target driving parameter according to the value of the at least one reference driving parameter corresponding to the target driving parameter and the relationship; and
   a controlling unit, configured to control the vehicle to drive autonomously according to the value of the target driving parameter.

In a possible implementation, the acquiring module 902 includes:
a transmitting unit, configured to transmit a behavioral driving habit acquisition request to a server, where the behavioral driving habit acquisition request includes the identifier of the user; and
a receiving unit, configured to receive the association relationship between the driving parameters from the server.

In a possible implementation, the association relationship between the driving parameters is obtained using the method for determining a behavioral driving habit according to the aforementioned embodiments.

The apparatus provided in the present embodiment can be used to implement the method for controlling vehicle driving in the aforementioned method embodiments; implementation principles and technical effects therebetween are similar, and details will not be described here again.

According to an embodiment of the present invention, the present invention also provides an electronic device and a readable storage medium. The electronic device may be an on-board unit in a vehicle or other vehicle-mounted device. The electronic device may also be a server.

According to an embodiment of the present invention, the present invention also provides a computer program product, where the computer program product includes a computer program stored in a readable storage medium, at least one processor of an electronic device may read the computer program from the readable medium storage, and the at least one processor executes the computer program to enable the electronic device to execute the solution provided in any one of the aforementioned embodiments.

According to an embodiment of the present invention, the present invention further provides a computer program stored in a readable storage medium, where at least one processor of an electronic device can read the computer program from the readable storage medium, and the at least one processor executes the computer program to enable the electronic device to execute the solution according to any one of the aforementioned embodiments.

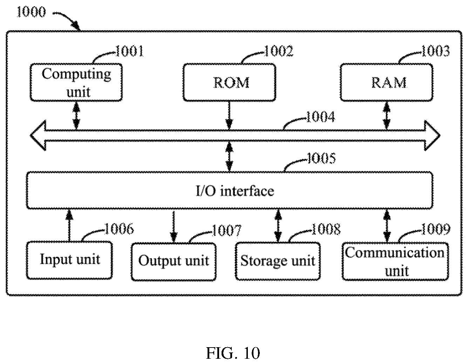

FIG. 10 shows a schematic block diagram illustrating an exemplary electronic device 1000 which can be used to implement an embodiment of the present invention. The electronic device is intended to represent various forms of digital computers, such as a laptop computer, a desktop computer, a workstation, a personal digital assistant, a server, a blade server, a mainframe computer and other suitable computers. The electronic device may also represent various forms of mobile apparatuses, such as a personal digital assistant, a cellular phone, a smart phone, a wearable device and other similar computing apparatuses. The components shown herein, their connections and relationships, and their functions are merely exemplary, and are not intended to limit the implementation of the present invention described and/or required herein.

As shown in FIG. 10, the electronic device 1000 includes a computing unit 1001, which may perform various appropriate actions and processes according to a computer program stored in a read-only memory (ROM) 1002 or a computer program loaded from a storage unit 1008 to a random access memory (RAM) 1003. In the RAM 1003, various programs and data required for operations of the electronic device 1000 may also be stored. The computing unit 1001, the ROM 1002 and the RAM 1003 are connected to each other through a bus 1004. An input/output (I/O) interface 1005 is also connected to the bus 1004.

Multiple components in the electronic device 1000 are connected to the I/O interface 1005, and the components include: an input unit 1006, such as a keyboard, a mouse, etc.; an output unit 1007, such as various types of displays, speakers, etc.; the storage unit 1008, such as a magnetic disk, an optical disc, etc.; and a communication unit 1009, such as a network card, a modem, a wireless communication transceiver, etc. The communication unit 1009 allows the electronic device 1000 to exchange information/data with other devices over a computer network such as Internet and/or various telecommunication networks.

The computing unit 1001 may be various general-purpose and/or special-purpose processing components with processing and computing capabilities. Some examples of the computing unit 1001 include, but are not limited to, central processing units (CPU), graphic processing units (GPU), various dedicated artificial intelligence (AI) computing chips, various computing units that run machine learning model algorithms, digital signal processors (DSP), and also any appropriate processors, controllers, microcontrollers, etc. The computing unit 1001 executes each method and process described above, for example, the method for determining a behavioral driving habit or the method for controlling a vehicle driving. For example, in some embodiments, the method for determining a behavioral driving habit or the method for controlling a vehicle driving can be implemented as a computer software program, which is tangibly contained in a machine-readable medium, such as the storage unit 1008. In some embodiments, part or entirety of the computer program may be loaded and/or installed into the electronic device 1000 via the ROM 1002 and/or the communication unit 1009. When the computer program is loaded into the RAM 1003 and executed by the computing unit 1001, one or more steps of the method for determining a behavioral driving habit or the method for controlling a vehicle driving as described above may be executed. Alternatively, in other embodiments, the computing unit 1001 may be configured to perform the method for determining a behavioral driving habit or the method for controlling a vehicle driving in any other suitable manner (for example, by means of firmware).

Various implementations of the systems and technologies described above herein may be implemented in digital electronic circuit systems, integrated circuit systems, field programmable gate arrays (FPGA), application specific integrated circuits (ASIC), application specific standard parts (ASSP), system-on-chips (SOC), complex programmable logic devices (CPLD), computer hardware, firmware, software, and/or their combination. These various implementations may include: being implemented in one or more computer programs, where the one or more computer programs may be executed and/or interpreted on a programmable system including at least one programmable processor. The programmable processor may be a special-purpose or general-purpose programmable processor, can receive data and instructions from a storage system, at least one input apparatus and at least one output apparatus, and transmit the data and instructions to the storage system, the at least one input apparatus and the at least one output apparatus.

Program codes for implementing the methods of the present invention can be written in one programming language or any combination of multiple programming languages. These program codes can be provided to a processor or a controller of a general-purpose computer, a special-purpose computer, or other programmable data processing apparatus, so that functions/operations specified in flowcharts and/or block diagrams are implemented when the program codes are executed by the processor or the controller. The program codes may be executed entirely and partly on a machine, partly executed on the machine and partly executed on a remote machine as an independent software package, or entirely executed on the remote machine or a server.

In the context of the present invention, the machine-readable medium may be a tangible medium, which may contain or store a program for an instruction execution system, apparatus, or device to use or to be used in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium would include an electrically connected portable computer disk based on one or more wires, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

In order to provide interaction with users, the systems and techniques described herein can be implemented on a computer, where the computer has: a display apparatus for displaying information to users (for example, a CRT (cathode ray tube) or LCD (liquid crystal display) monitor); and a keyboard and a pointing apparatus (for example, a mouse or a trackball) through which the users can provide input to the computer. Other kinds of apparatuses can also be used to provide interaction with the users; for example, a feedback provided to the users may be any form of sensory feedback (for example, visual feedback, auditory feedback, or tactile feedback); and can receive inputs from the users in any form (including acoustic input, voice input, or tactile input).

The systems and technologies described herein can be implemented in a computing system that includes background components (for example, as a data server), or a computing system that includes middleware components (for example, an application server), or a computing system that includes front-end components (for example, a user computer with a graphical user interface or a web browser through which the user can interact with implementations of the systems and technologies described herein), or a computing system that includes any combination of such background components, middleware components or front-end components. The components of the system can be connected to each other through digital data communication in any form or medium (for example, a communication network). Examples of the communication network include: a local area network (LAN), a wide area network (WAN) and the Internet.

The computing system may include a client and a server. The client and server are generally far away from each other and usually interact through a communication network. A relationship between the client and the server is generated through computer programs running on corresponding computers and having a client-server relationship with each other. The server may be a cloud server, also known as a cloud computing server or a cloud host, which is a host product in a cloud computing service system to overcome defects of huge management difficulty and weak business scalability existing in a traditional physical host and a VPS service ("Virtual Private Server", or "VPS" for short). The server may also be a server of a distributed system, or a server combined with a blockchain.

It should be understood that the various forms of processes shown above may be used to reorder, add or delete steps. For example, the steps described in the present invention may be executed in parallel, sequentially or in a different order, as long as a desired result of the technical solution disclosed in the present invention can be achieved, and there is no limitation herein.

The aforementioned specific implementations do not constitute a limitation to the protection scope of the present invention. Persons skilled in the art should understand that various modifications, combinations, sub-combinations and substitutions may be made within the scope of the invention as defined by the claims.

## Claims

1. A method for determining a behavioral driving habit, comprising:
acquiring (S301) driving behavior-related data during a user's manual driving a first vehicle on a road and map data; and
determining (S302), according to the driving behavior-related data and the map data, an association relationship between driving parameters used during the user's manual driving the first vehicle, wherein the association relationship between the driving parameters represents a behavioral driving habit of the user, and the association relationship between the driving parameters is used to update a driving strategy during autonomous driving of a second vehicle;
wherein the determining (S302), according to the driving behavior-related data and the map data, the association relationship between the driving parameters used during the user's manual driving the first vehicle comprises:
determining at least one target driving parameter according to the driving strategy; and
determining a driving parameter relationship corresponding to the respective target driving parameter according to the driving behavior-related data and the map data;
wherein a driving parameter relationship corresponding to one target driving parameter comprises the target driving parameter, at least one reference driving parameter corresponding to the target driving parameter and a relationship between the target driving parameter and the at least one reference driving parameter;
**characterised in that**
the road comprises multiple road sections, and a type of each of the driving parameters is a user manipulation type or a driving maintenance type, wherein the user manipulation type means that the user actively initiates a change in driving status, and the driving maintenance type means that the first vehicle is maintained in stable driving status;
for any target driving parameter of the at least one target driving parameter, the determining the driving parameter relationship corresponding to the target driving parameter according to the driving behavior-related data and the map data comprises:
determining (S404) at least one target road section from the multiple road sections, wherein a driving type corresponding to the target road section matches a type of the target driving parameter; and
determining (S405) the driving parameter relationship corresponding to the target driving parameter according to driving behavior-related data and map data that correspond to the at least one target road section.

2. The method according to claim 1, wherein the determining (S405) the driving parameter relationship corresponding to the target driving parameter according to the driving behavior-related data and the map data that correspond to the at least one target road section comprises:
extracting, from driving behavior-related data and map data that correspond to each target road section, a value of the target driving parameter, and determining, according to the value of the target driving parameter and a value of a further driving parameter from the target road section, a relationship between the target driving parameter and the further driving parameter from the target road section; and
determining the driving parameter relationship corresponding to the target driving parameter according to the relationship determined from the at least one target road section.

3. The method according to claim 1, wherein the determining (S405) the driving parameter relationship corresponding to the target driving parameter according to the driving behavior-related data and the map data that correspond to the at least one target road section comprises:
determining at least one reference driving parameter corresponding to the target driving parameter;
extracting, from driving behavior-related data and map data that correspond to each target road section, a value of the target driving parameter and a value of the at least one reference driving parameter corresponding to the target driving parameter, and determining a relationship between the target driving parameter and the at least one reference driving parameter according to the value of the target driving parameter and the value of the at least one reference driving parameter corresponding to the target driving parameter; and
determining the driving parameter relationship corresponding to the target driving parameter according to the relationship determined from the at least one target road section.

4. The method according to claim 1, before the determining the at least one target road section from the multiple road sections, further comprising:
segmenting (S402) the road to obtain the multiple road sections;
determining (S402), from the driving behavior-related data during the driving on the road and the map data, driving behavior-related data and map data that correspond to the respective road sections; and
determining (S403), according to the driving behavior-related data corresponding to each of the road sections, a driving type of the road section.

5. The method according to claim 4, wherein the determining (S403), according to the driving behavior-related data corresponding to each of the road sections, the driving type of the road section comprises:
determining, according to the driving behavior-related data corresponding to the road section, whether the first vehicle has a preset driving behavior in the road section, wherein the preset driving behavior comprises at least one of: lane-changing, overtaking, turning and braking;
if yes, determining that the driving type of the road section is the user manipulation type; and
if no, determining that the driving type of the road section is the driving maintenance type.

6. The method according to claim 4, after the determining (S402), from the driving behavior-related data during the driving on the road and the map data, the driving behavior-related data and the map data that correspond to the respective road sections, further comprising:
for any road section of the multiple road sections, determining, according to driving behavior-related data and map data that correspond to the road section, whether the user has a preset dangerous driving behavior in the road section; and
if yes, deleting the driving behavior-related data and the map data that correspond to the road section.

7. The method according to any one of claims 1 to 6, after the determining the driving parameter relationship corresponding to the respective target driving parameter according to the driving behavior-related data and the map data, further comprising:
if a behavioral driving habit represented by a driving parameter relationship corresponding to a first target driving parameter has a safety less than a preset threshold, deleting the driving parameter relationship corresponding to the first target driving parameter, or processing the driving parameter relationship corresponding to the first target driving parameter to enable a driving behavior habit represented by a processed driving parameter relationship corresponding to the first target driving parameter to have a safety greater than or equal to the preset threshold; or,
if the driving parameter relationship corresponding to the first target driving parameter is exclusive of a preset reference driving parameter, processing the driving parameter relationship corresponding to the first target driving parameter with a preset model to enable a processed driving parameter relationship corresponding to the first target driving parameter to be inclusive of the preset reference driving parameter and a relationship between the first target driving parameter and the preset reference driving parameter;
wherein the first target driving parameter is any one of the at least one target driving parameter.

8. A method for controlling vehicle driving, comprising:
receiving (S501, S705) an autonomous driving request, wherein the autonomous driving request comprises an identifier of a user;
acquiring (S502) an association relationship between driving parameters according to the identifier of the user, wherein the association relationship between the driving parameters represents a behavioral driving habit of the user;
updating (S503, S708), according to the association relationship between the driving parameters, a driving strategy of a second vehicle to obtain a target driving strategy; and
controlling (S504, S709) the second vehicle to drive autonomously according to the target driving strategy;
wherein the association relationship between the driving parameters is obtained using the method according to any one of claims 1 to 7.

9. The method according to claim 8, wherein the association relationship between the driving parameters comprises: a driving parameter relationship corresponding to at least one target driving parameter; for any target driving parameter of the at least one target driving parameter, the updating (S503, S708), according to the association relationship between the driving parameters, the driving strategy of the second vehicle comprises:
substituting a value of the target driving parameter in the driving strategy of the second vehicle with a driving parameter relationship corresponding to the target driving parameter.

10. The method according to claim 9, wherein a driving parameter relationship corresponding to one target driving parameter comprises the target driving parameter, at least one reference driving parameter corresponding to the target driving parameter and a relationship between the target driving parameter and the at least one reference driving parameter;
the controlling (S504, S709) the second vehicle to drive autonomously according to the target driving strategy comprises:
acquiring a value of the at least one reference driving parameter corresponding to the target driving parameter according to real-time driving data of the second vehicle and map data;
determining a value of the target driving parameter according to the value of the at least one reference driving parameter corresponding to the target driving parameter and the relationship; and
controlling the second vehicle to drive autonomously according to the value of the target driving parameter.

11. The method according to claim 8, wherein the acquiring (S502) the association relationship between the driving parameters according to the identifier of the user comprises:
transmitting a behavioral driving habit acquisition request to a server, wherein the behavioral driving habit acquisition request comprises the identifier of the user; and
receiving the association relationship between the driving parameters from the server.

12. An apparatus for determining a behavioral driving habit, comprising:
an acquiring module (801), configured to acquire driving behavior-related data during a user's manual driving a first vehicle on a road and map data; and
a processing module (802), configured to determine, according to the driving behavior-related data and the map data, an association relationship between driving parameters used during the user's manual driving the first vehicle, wherein the association relationship between the driving parameters represents a behavioral driving habit of the user, and the association relationship between the driving parameters is used to update a driving strategy during autonomous driving of a second vehicle;
wherein the processing module (802) comprise:
a first determining unit, configured to determine at least one target driving parameter according to the driving strategy; and
a second determining unit, configured to determine a driving parameter relationship corresponding to the respective target driving parameter according to the driving behavior-related data and the map data;
wherein a driving parameter relationship corresponding to one target driving parameter comprises the target driving parameter, at least one reference driving parameter corresponding to the target driving parameter and a relationship between the target driving parameter and the at least one reference driving parameter;
**characterised in that**
the road comprises multiple road sections, and a type of each of the driving parameters is a user manipulation type or a driving maintenance type, wherein the user manipulation type means that the user actively initiates a change in driving status, and the driving maintenance type means that the first vehicle is maintained in stable driving status;
wherein for any target driving parameter of the at least one target driving parameter, the second determining unit comprise:
a first determining subunit, configured to determine at least one target road section from the multiple road sections, wherein a driving type corresponding to the target road section matches a type of the target driving parameter; and
a second determining subunit, configured to determine the driving parameter relationship corresponding to the target driving parameter according to driving behavior-related data and map data that correspond to the at least one target road section.

## Patentansprüche

1. Verfahren zum Bestimmen einer Fahrverhaltensgewohnheit, umfassend:
Erfassen (S301) von fahrverhaltensbezogenen Daten während eines manuellen Fahrens eines ersten Fahrzeugs auf einer Straße durch einen Benutzer und von Kartendaten; und
Bestimmen (S302), gemäß den fahrverhaltensbezogenen Daten und den Kartendaten, einer Zuordnungsbeziehung zwischen Fahrparametern, die während des manuellen Fahrens des ersten Fahrzeugs durch den Benutzer verwendet werden, wobei die Zuordnungsbeziehung zwischen den Fahrparametern eine Fahrverhaltensgewohnheit des Benutzers darstellt, und die Zuordnungsbeziehung zwischen den Fahrparametern verwendet wird, um eine Fahrstrategie während autonomen Fahrens eines zweiten Fahrzeugs zu aktualisieren;
wobei das Bestimmen (S302), gemäß den fahrverhaltensbezogenen Daten und den Kartendaten, der Zuordnungsbeziehung zwischen den Fahrparametern, die während des manuellen Fahrens des ersten Fahrzeugs durch den Benutzer verwendet werden, Folgendes umfasst:
Bestimmen mindestens eines Zielfahrparameters gemäß der Fahrstrategie; und
Bestimmen einer Fahrparameterbeziehung, die dem jeweiligen Zielfahrparameter entspricht, gemäß den fahrverhaltensbezogenen Daten und den Kartendaten;
wobei eine Fahrparameterbeziehung, die einem Zielfahrparameter entspricht, den Zielfahrparameter, mindestens einen Referenzfahrparameter, der dem Zielfahrparameter entspricht, und eine Beziehung zwischen dem Zielfahrparameter und dem mindestens einen Referenzfahrparameter umfasst;
**dadurch gekennzeichnet, dass** die Straße mehrfache Straßenabschnitte umfasst, und ein Typ jedes der Fahrparameter ein Benutzermanipulationstyp oder ein Fahraufrechterhaltungstyp ist, wobei der Benutzermanipulationstyp bedeutet, dass der Benutzer aktiv eine Fahrstatusänderung einleitet, und der Fahraufrechterhaltungstyp bedeutet, dass das erste Fahrzeug in einem stabilen Fahrstatus aufrechterhalten wird,
wobei für einen beliebigen Zielfahrparameter des mindestens einen Zielfahrparameters das Bestimmen der Fahrparameterbeziehung, die dem Zielfahrparameter entspricht, gemäß den fahrverhaltensbezogenen Daten und den Kartendaten Folgendes umfasst:
Bestimmen (S404) mindestens eines Zielstraßenabschnitts aus den mehrfachen Straßenabschnitten, wobei ein Fahrtyp, der dem Zielstraßenabschnitt entspricht, mit einem Typ des Zielfahrparameters übereinstimmt; und
Bestimmen (405) der Fahrparameterbeziehung, die dem Zielfahrparameter entspricht, gemäß fahrverhaltensbezogenen Daten und Kartendaten, die dem mindestens einen Zielstraßenabschnitt entsprechen.

2. Verfahren nach Anspruch 1, wobei das Bestimmen (S405) der Fahrparameterbeziehung, die dem Zielfahrparameter entspricht, gemäß den fahrverhaltensbezogenen Daten und den Kartendaten, die dem mindestens einen Zielstraßenabschnitt entsprechen, Folgendes umfasst:
Extrahieren, aus fahrverhaltensbezogenen Daten und Kartendaten, die jedem Zielstraßenabschnitt entsprechen, eines Werts des Zielfahrparameters, und Bestimmen, gemäß dem Wert des Zielfahrparameters und einem Wert eines weiteren Zielfahrparameters aus dem Zielstraßenabschnitt, einer Beziehung zwischen dem Zielfahrparameter und dem weiteren Fahrparameter aus dem Zielstraßenabschnitt; und
Bestimmen der Fahrparameterbeziehung, die dem Zielfahrparameter entspricht, gemäß der aus dem mindestens einen Zielstraßenabschnitt bestimmten Beziehung.

3. Verfahren nach Anspruch 1, wobei das Bestimmen (S405) der Fahrparameterbeziehung, die dem Zielfahrparameter entspricht, gemäß den fahrverhaltensbezogenen Daten und den Kartendaten, die dem mindestens einen Zielstraßenabschnitt entsprechen, Folgendes umfasst:
Bestimmen mindestens eines Referenzfahrparameters, der dem Zielfahrparameter entspricht;
Extrahieren, aus fahrverhaltensbezogenen Daten und Kartendaten, die jedem Zielstraßenabschnitt entsprechen, eines Werts des Zielfahrparameters und eines Werts des mindestens einen Referenzfahrparameters, der dem Zielfahrparameter entspricht, und Bestimmen einer Beziehung zwischen dem Zielfahrparameter und dem mindestens einen Referenzfahrparameter gemäß dem Wert des Zielfahrparameters und dem Wert des mindestens einen Referenzfahrparameters, der dem Zielfahrparameter entspricht; und
Bestimmen der Fahrparameterbeziehung, die dem Zielfahrparameter entspricht, gemäß der aus dem mindestens einen Zielstraßenabschnitt bestimmten Beziehung.

4. Verfahren nach Anspruch 1, das vor dem Bestimmen des mindestens einen Zielstraßenabschnitts aus den mehrfachen Straßenabschnitten weiter Folgendes umfasst:
Segmentieren (S402) der Straße, um mehrfache Straßenabschnitts zu erhalten;
Bestimmen (S402), aus den fahrverhaltensbezogenen Daten während des Fahrens auf der Straße und den Kartendaten, von fahrverhaltensbezogenen Daten und Kartendaten, die den jeweiligen Straßenabschnitten entsprechen; und
Bestimmen (S403), gemäß den fahrverhaltensbezogenen Daten, die jedem der Straßenabschnitte entsprechen, eines Fahrtyps des Straßenabschnitts.

5. Verfahren nach Anspruch 4, wobei das Bestimmen (S403), gemäß den fahrverhaltensbezogenen Daten, die jedem der Straßenabschnitte entsprechen, des Fahrtyps des Straßenabschnitts Folgendes umfasst:
Bestimmen, gemäß den fahrverhaltensbezogenen Daten, die dem Straßenabschnitt entsprechen, ob das erste Fahrzeug ein voreingestelltes Fahrverhalten im Straßenabschnitt aufweist, wobei das voreingestellte Fahrverhalten mindestens eines umfasst aus: Fahrspurwechsel, Überholen, Abbiegen und Bremsen;
wenn ja, Bestimmen, dass der Fahrtyp des Straßenabschnitts der Benutzermanipulationstyp ist; und
wenn nein, Bestimmen, dass der Fahrtyp des Straßenabschnitts der Fahraufrechterhaltungstyp ist.

6. Verfahren nach Anspruch 4, das nach dem Bestimmen (S402), aus den fahrverhaltensbezogenen Daten während des Fahrens auf der Straße und den Kartendaten, der fahrverhaltensbezogenen Daten und der Kartendaten, die den jeweiligen Straßenabschnitten entsprechen, weiter Folgendes umfasst:
für einen beliebigen Straßenabschnitt der mehrfachen Straßenabschnitte, Bestimmen, gemäß fahrverhaltensbezogenen Daten und Kartendaten, die dem Straßenabschnitt entsprechen, ob der Benutzer ein voreingestelltes gefährliches Fahrverhalten im Straßenabschnitt aufweist; und
wenn ja, Löschen der fahrverhaltensbezogenen Daten und der Kartendaten, die dem Straßenabschnitt entsprechen.

7. Verfahren nach einem der Ansprüche 1 bis 6, das nach dem Bestimmen der Fahrparameterbeziehung, die dem jeweiligen Zielfahrparameter entspricht, gemäß den fahrverhaltensbezogenen Daten und den Kartendaten weiter Folgendes umfasst:
wenn eine Fahrverhaltensgewohnheit, die von einer Fahrparameterbeziehung dargestellt wird, die einem ersten Zielfahrparameter entspricht, eine geringere Sicherheit als eine voreingestellte Schwelle aufweist, Löschen der Fahrparameterbeziehung, die dem ersten Zielfahrparameter entspricht, oder Verarbeiten der Fahrparameterbeziehung, die dem ersten Zielfahrparameter entspricht, um eine Fahrverhaltensgewohnheit zu ermöglichen, die von einer verarbeiteten Fahrparameterbeziehung dargestellt wird, die dem ersten Zielfahrparameter entspricht, eine Sicherheit aufzuweisen, die größer oder gleich der voreingestellten Schwelle ist; oder
wenn die Fahrparameterbeziehung, die dem ersten Zielfahrparameter entspricht, einen voreingestellten Referenzfahrparameter ausschließt, Verarbeiten der Fahrparameterbeziehung, die dem ersten Zielfahrparameter entspricht, mit einem voreingestellten Modell, um eine verarbeitete Fahrparameterbeziehung zu ermöglichen, die dem ersten Zielfahrparameter entspricht, den voreingestellten Referenzfahrparameter und eine Beziehung zwischen dem ersten Zielfahrparameter und dem voreingestellten Referenzfahrparameter einzuschließen;
wobei der erste Zielfahrparameter ein beliebiger des mindestens einen Zielfahrparameters ist.

8. Verfahren zum Steuern des Fahrens eines Fahrzeugs, umfassend:
Empfangen (S501, S705) einer Anfrage für autonomes Fahren; wobei die Anfrage für autonomes Fahren eine Kennung eines Benutzers umfasst:
Erfassen (S502) einer Zuordnungsbeziehung zwischen Fahrparametern gemäß der Kennung des Benutzers, wobei die Zuordnungsbeziehung zwischen den Fahrparametern eine Fahrverhaltensgewohnheit des Benutzers darstellt;
Aktualisieren (S503, S708), gemäß der Zuordnungsbeziehung zwischen den Fahrparametern, einer Fahrstrategie eines zweiten Fahrzeugs, um eine Zielfahrstrategie zu erhalten; und
Steuern (S504, S709) des zweiten Fahrzeugs zum autonomen Fahren gemäß der Zielfahrstrategie;
wobei die Zuordnungsbeziehung zwischen den Fahrparametern unter Verwendung des Verfahrens nach einem der Ansprüche 1 bis 7 erhalten wird.

9. Verfahren nach Anspruch 8, wobei die Zuordnungsbeziehung zwischen den Fahrparametern Folgendes umfasst: eine Fahrparameterbeziehung, die mindestens einem Zielfahrparameter entspricht; für einen beliebigen Zielfahrparameter des mindestens einen Zielfahrparameters, das Aktualisieren (S503, S708), gemäß der Zuordnungsbeziehung zwischen den Fahrparametern, der Fahrstrategie des zweiten Fahrzeugs Folgendes umfasst:
Substituieren eines Werts des Zielfahrparameters in der Fahrstrategie des zweiten Fahrzeugs durch eine Fahrparameterbeziehung, die dem Zielfahrparameter entspricht.

10. Verfahren nach Anspruch 9, wobei eine Fahrparameterbeziehung, die einem Zielfahrparameter entspricht, den Zielfahrparameter, mindestens einen Referenzfahrparameter, der dem Zielfahrparameter entspricht, und eine Beziehung zwischen dem Zielfahrparameter und dem mindestens einen Referenzfahrparameter umfasst;
das Steuern (S504, S709) des zweiten Fahrzeugs zum autonomen Fahren gemäß der Zielfahrstrategie Folgendes umfasst:
Erfassen eines Werts des mindestens einen Referenzfahrparameters, der dem Zielfahrparameter entspricht, gemäß Echtzeit-Fahrdaten des zweiten Fahrzeugs und Kartendaten;
Bestimmen eines Werts des Zielfahrparameters gemäß dem Wert des mindestens einen Referenzfahrparameters, der dem Zielfahrparameter entspricht, und der Beziehung; und
Steuern des zweiten Fahrzeugs zum autonomen Fahren gemäß dem Wert des Zielfahrparameters,

11. Verfahren nach Anspruch 8, wobei das Erfassen (S502) der Zuordnungsbeziehung zwischen den Fahrparametern gemäß der Kennung des Benutzers Folgendes umfasst:
Übertragen einer Fahrverhaltensgewohnheitsanfrage an einen Server, wobei die Fahrverhaltensgewohnheitsanfrage die Kennung des Benutzers umfasst; und
Empfangen der Zuordnungsbeziehung zwischen den Fahrparametern von dem Server.

12. Einrichtung zum Bestimmen einer Fahrverhaltensgewohnheit, umfassend:
ein Erfassungsmodul (801), das konfiguriert ist zum Erfassen von fahrverhaltensbezogenen Daten während eines manuellen Fahrens eines ersten Fahrzeugs auf einer Straße durch einen Benutzer und von Kartendaten; und
ein Verarbeitungsmodul (802), das konfiguriert ist zum Bestimmen, gemäß den fahrverhaltensbezogenen Daten und den Kartendaten, einer Zuordnungsbeziehung zwischen Fahrparametern, die während des manuellen Fahrens des ersten Fahrzeugs durch den Benutzer verwendet werden, wobei die Zuordnungsbeziehung zwischen den Fahrparametern eine Fahrverhaltensgewohnheit des Benutzers darstellt, und die Zuordnungsbeziehung zwischen den Fahrparametern verwendet wird, um eine Fahrstrategie während autonomen Fahrens eines zweiten Fahrzeugs zu aktualisieren;
wobei das Verarbeitungsmodul (802) Folgendes umfasst:
eine erste Bestimmungseinheit, die konfiguriert ist zum Bestimmen mindestens eines Zielfahrparameters gemäß der Fahrstrategie; und
eine zweite Bestimmungseinheit, die konfiguriert ist zum Bestimmen einer Fahrparameterbeziehung, die dem jeweiligen Zielfahrparameter entspricht, gemäß den fahrverhaltensbezogenen Daten und den Kartendaten;
wobei eine Fahrparameterbeziehung, die einem Zielfahrparameter entspricht, den Zielfahrparameter, mindestens einen Referenzfahrparameter, der dem Zielfahrparameter entspricht, und eine Beziehung zwischen dem Zielfahrparameter und dem mindestens einen Referenzfahrparameter umfasst;
**dadurch gekennzeichnet, dass** die Straße mehrfache Straßenabschnitte umfasst, und ein Typ jedes der Fahrparameter ein Benutzermanipulationstyp oder ein Fahraufrechterhaltungstyp ist, wobei der Benutzermanipulationstyp bedeutet, dass der Benutzer aktiv eine Fahrstatusänderung einleitet, und der Fahraufrechterhaltungstyp bedeutet, dass das erste Fahrzeug in einem stabilen Fahrstatus aufrechterhalten wird,
wobei für einen beliebigen Zielfahrparameter des mindestens einen Zielfahrparameters die zweite Bestimmungseinheit Folgendes umfasst:
eine erste Bestimmungsuntereinheit, die konfiguriert ist zum Bestimmen mindestens eines Zielstraßenabschnitts aus den mehrfachen Straßenabschnitten, wobei ein Fahrtyp, der dem Zielstraßenabschnitt entspricht, mit einem Typ des Zielfahrparameters übereinstimmt; und
eine zweite Bestimmungsuntereinheit, die konfiguriert ist zum Bestimmen der Fahrparameterbeziehung, die dem Zielfahrparameter entspricht, gemäß fahrverhaltensbezogenen Daten und Kartendaten, die dem mindestens einen Zielstraßenabschnitt entsprechen.

## Revendications

1. Procédé de détermination d'une habitude comportementale de conduite, comprenant :
l'acquisition (S301) de données liées au comportement de conduite pendant une conduite manuelle d'un utilisateur d'un premier véhicule sur une route et de données cartographiques ; et
la détermination (S302), en fonction des données liées au comportement de conduite et des données cartographiques, d'une relation d'association entre des paramètres de conduite utilisés pendant la conduite manuelle de l'utilisateur du premier véhicule, dans lequel la relation d'association entre les paramètres de conduite représente une habitude comportementale de conduite de l'utilisateur, et la relation d'association entre les paramètres de conduite est utilisée pour mettre à jour une stratégie de conduite pendant une conduite autonome d'un second véhicule ;
dans lequel la détermination (S302), en fonction des données liées au comportement de conduite et des données cartographiques, de la relation d'association entre les paramètres de conduite utilisée pendant la conduite manuelle de l'utilisateur du premier véhicule comprend :
la détermination d'au moins un paramètre de conduite cible en fonction de la stratégie de conduite ; et
la détermination d'une relation de paramètre de conduite correspondant au paramètre de conduite cible respectif en fonction des données liées au comportement de conduite et des données cartographiques ;
dans lequel une relation de paramètre de conduite correspondant à un paramètre de conduite cible comprend le paramètre de conduite cible, au moins un paramètre de conduite de référence correspondant au paramètre de conduite cible et une relation entre le paramètre de conduite cible et le au moins un paramètre de conduite de référence ;
**caractérisé en ce que** la route comprend de multiples sections de route, et un type de chacun des paramètres de conduite est un type manipulation d'utilisateur ou un type maintien de conduite, dans lequel le type manipulation d'utilisateur signifie que l'utilisateur amorce activement une modification d'un état de conduite, et le type maintien de conduite signifie que le premier véhicule est maintenu dans un état de conduite stable ;
pour un quelconque paramètre de conduite cible du au moins un paramètre de conduite cible, la détermination de la relation de paramètre de conduite correspondant au paramètre de conduite cible en fonction des données liées au comportement de conduite et des donnée cartographique comprend :
la détermination (S404) d'au moins une section de route cible parmi les multiples sections de route, dans lequel un type de conduite correspondant à la section de route cible concorde avec un type du paramètre de conduite cible ; et
la détermination (S405) de la relation de paramètre de conduite correspondant au paramètre de conduite cible en fonction des données liées au comportement de conduite et des données cartographiques qui correspondent à la au moins une section de route cible.

2. Procédé selon la revendication 1, dans lequel la détermination (S405) de la relation de paramètre de conduite correspondant au paramètre de conduite cible en fonction des données liées au comportement de conduite et des données cartographiques qui correspondent à la au moins une section de route cible comprend :
l'extraction, à partir des données liées au comportement de conduite et des données cartographiques qui correspondent à chaque section de route cible, d'une valeur du paramètre de conduite cible, et la détermination, en fonction de la valeur du paramètre de conduite cible et d'une valeur d'un autre paramètre de conduite à partir de la section de route cible, d'une relation entre le paramètre de conduite cible et l'autre paramètre de conduite à partir de la section de route cible ; et
la détermination de la relation de paramètre de conduite correspondant au paramètre de conduite cible en fonction de la relation déterminée à partir de la au moins une section de route cible.

3. Procédé selon la revendication 1, dans lequel la détermination (S405) de la relation de paramètre de conduite correspondant au paramètre de conduite cible en fonction des données liées au comportement de conduite et des données cartographiques qui correspondent à la au moins une section de route cible comprend :
la détermination d'au moins un paramètre de conduite de référence en fonction du paramètre de conduite cible ;
l'extraction, à partir des données liées au comportement de conduite et des données cartographiques qui correspondent à chaque section de route cible, d'une valeur du paramètre de conduite cible et d'une valeur du au moins un paramètre de conduite de référence correspondant au paramètre de conduite cible, et la détermination d'une relation entre le paramètre de conduite cible et le au moins un paramètre de conduite de référence en fonction de la valeur du paramètre de conduite cible et de la valeur du au moins un paramètre de conduite de référence correspondant au paramètre de conduite cible ; et
la détermination de la relation de paramètre de conduite correspondant au paramètre de conduite cible en fonction de la relation déterminée à partir de la au moins une section de route cible.

4. Procédé selon la revendication 1, avant la détermination de la au moins une section de route cible parmi les multiples sections de route, comprenant en outre :
la segmentation (S402) de la route pour obtenir les multiples sections de route ;
la détermination (S402), à partir des données liées au comportement de conduite pendant la conduite sur la route et des données cartographiques, de données liées au comportement de conduite et de données cartographiques qui correspondent aux sections de route respectives ; et
la détermination (S403), en fonction des données liées au comportement de conduite correspondant à chacune des sections de route, d'un type de conduite de la section de route.

5. Procédé selon la revendication 4, dans lequel la détermination (S403), en fonction des données liées au comportement de conduite correspondant à chacune des sections de route, du type de conduite de la section de route comprend :
la détermination, en fonction des données liées au comportement de conduite correspondant à la section de route, pour établir si le premier véhicule présente un comportement de conduite prédéfini dans la section de route, dans lequel le comportement de conduite prédéfini comprend au moins un parmi : un changement de voie, un dépassement, un virage et un freinage ;
si tel est le cas, la détermination que le type de conduite de la section de route est le type manipulation d'utilisateur ; et
dans le cas contraire, la détermination que le type de conduite de la section de route est le type maintien de conduite.

6. Procédé selon la revendication 4, suite à la détermination (S402), à partir des données liées au comportement de conduite pendant la conduite sur la route et des données cartographiques, de données liées au comportement de conduite et de données cartographiques qui correspondent aux sections de route respectives, comprenant en outre :
pour une quelconque section de route des multiples sections de route, la détermination, en fonction des données liées au comportement de conduite et des données cartographiques qui correspondent à la section de route, pour établir si l'utilisateur présente un comportement de conduite dangereux prédéfini dans la section de route ; et
si tel est le cas, la suppression des données liées au comportement de conduite et des données cartographiques qui correspondent à la section de route.

7. Procédé selon l'une quelconque des revendications 1 à 6, suite à la détermination de la relation de paramètre de conduite correspondant au paramètre de conduite cible respectif en fonction des données liées au comportement de conduite et des données cartographiques, comprenant en outre :
si une habitude comportementale de conduite représentée par une relation de paramètre de conduite correspondant à un premier paramètre de conduite cible présente une sécurité inférieure à un seuil prédéfini, la suppression de la relation de paramètre de conduite correspondant au premier paramètre de conduite cible, ou le traitement de la relation de paramètre de conduite correspondant au premier paramètre de conduite cible pour permettre à une habitude de comportement de conduite représentée par une relation de paramètre de conduite traitée correspondant au premier paramètre de conduite cible de présenter une sécurité supérieure ou égale au seuil prédéfini ; ou,
si la relation de paramètre de conduite correspondant au premier paramètre de conduite cible ne tient pas compte d'un paramètre de conduite de référence prédéfini, le traitement de la relation de paramètre de conduite correspondant au premier paramètre de conduite cible avec un modèle prédéfini pour permettre à une relation de paramètre de conduite traitée correspondant au premier paramètre de conduite cible de tenir compte du paramètre de conduite de référence prédéfini et d'une relation entre le premier paramètre de conduite cible et le paramètre de conduite de référence prédéfini ;
dans lequel le premier paramètre de conduite cible est l'un quelconque du au moins un paramètre de conduite cible.

8. Procédé de commande de conduite de véhicule, comprenant :
la réception (S501, S705) d'une demande de conduite autonome, dans lequel la demande de conduite autonome comprend un identifiant d'un utilisateur ;
l'acquisition (S502) d'une relation d'association entre des paramètres de conduite en fonction de l'identifiant de l'utilisateur, dans lequel la relation d'association entre les paramètres de conduite représente une habitude comportementale de conduite de l'utilisateur ;
la mise à jour (S503, S708), en fonction de la relation d'association entre les paramètres de conduite, d'une stratégie de conduite d'un second véhicule pour obtenir une stratégie de conduite cible ; et
la commande (S504, S709) du second véhicule pour qu'il se déplace de façon autonome en fonction de la stratégie de conduite cible ;
dans lequel la relation d'association entre les paramètres de conduite est obtenue en utilisant le procédé selon l'une quelconque des revendications 1 à 7.

9. Procédé selon la revendication 8, dans lequel la relation d'association entre les paramètres de conduite comprend : une relation de paramètre de conduite correspondant à au moins un paramètre de conduite cible ; pour un quelconque paramètre de conduite cible du au moins un paramètre de conduite cible, la mise à jour (S503, S708), en fonction de la relation d'association entre les paramètres de conduite, de la stratégie de conduite du second véhicule comprend :
la substitution d'une valeur du paramètre de conduite cible dans la stratégie de conduite du second véhicule par une relation de paramètre de conduite correspondant au paramètre de conduite cible.

10. Procédé selon la revendication 9, dans lequel une relation de paramètre de conduite correspondant à un paramètre de conduite cible comprend le paramètre de conduite cible, au moins un paramètre de conduite de référence correspondant au paramètre de conduite cible et une relation entre le paramètre de conduite cible et le au moins un paramètre de conduite de référence ;
la commande (S504, S709) du second véhicule pour qu'il se déplace de façon autonome en fonction de la stratégie de conduite cible comprend ;
l'acquisition d'une valeur du au moins un paramètre de conduite de référence correspondant au paramètre de conduite cible en fonction de données de conduite en temps réel du second véhicule et de données cartographiques ;
la détermination d'une valeur du paramètre de conduite cible en fonction de la valeur du au moins un paramètre de conduite de référence correspondant au paramètre de conduite cible et de la relation ; et
la commande du second véhicule pour qu'il se déplace de façon autonome en fonction de la valeur du paramètre de conduite cible.

11. Procédé selon la revendication 8, dans lequel l'acquisition (S502) de la relation d'association entre les paramètres de conduite en fonction de l'identifiant de l'utilisateur comprend :
la transmission d'une demande d'acquisition d'habitude comportementale de conduite à un serveur, dans lequel la demande d'acquisition d'habitude comportementale de conduite comprend l'identifiant de l'utilisateur ; et
la réception de la relation d'association entre les paramètres de conduite en provenance du serveur.

12. Appareil pour déterminer une habitude comportementale de conduite, comprenant :
un module d'acquisition (801), configuré pour acquérir des données liées au comportement de conduite pendant une conduite manuelle d'un utilisateur d'un premier véhicule sur une route et des données cartographiques ; et
un module de traitement (802), configuré pour déterminer, en fonction des données liées au comportement de conduite et des données cartographiques, une relation d'association entre des paramètres de conduite utilisés pendant la conduite manuelle de l'utilisateur du premier véhicule, dans lequel la relation d'association entre les paramètres de conduite représente une habitude comportementale de conduite de l'utilisateur, et la relation d'association entre les paramètres de conduite est utilisée pour mettre à jour une stratégie de conduite pendant une conduite autonome d'un second véhicule ;
dans lequel le module de traitement (802) comprend :
une première unité de détermination, configurée pour déterminer au moins un paramètre de conduite cible en fonction de la stratégie de conduite ; et
une seconde unité de détermination, configurée pour déterminer une relation de paramètre de conduite correspondant au paramètre de conduite cible respectif en fonction des données liées au comportement de conduite et des données cartographiques ;
dans lequel une relation de paramètre de conduite correspondant à un paramètre de conduite cible comprend le paramètre de conduite cible, au moins un paramètre de conduite de référence correspondant au paramètre de conduite cible et une relation entre le paramètre de conduite cible et le au moins un paramètre de conduite de référence ;
**caractérisé en ce que** la route comprend de multiples sections de route, et un type de chacun des paramètres de conduite est un type manipulation d'utilisateur ou un type maintien de conduite, dans lequel le type manipulation d'utilisateur signifie que l'utilisateur amorce activement une modification d'un état de conduite, et le type maintien de conduite signifie que le premier véhicule est maintenu dans un état de conduite stable ;
dans lequel pour un quelconque paramètre de conduite cible du au moins un paramètre de conduite cible, la seconde unité de détermination comprend :
une première sous-unité de détermination, configurée pour déterminer au moins une section de route cible parmi les multiples sections de route, dans lequel un type de conduite correspondant à la section de route cible concorde avec un type du paramètre de conduite cible ; et
une seconde sous-unité de détermination, configurée pour déterminer la relation de paramètre de conduite correspondant au paramètre de conduite cible en fonction des données liées au comportement de conduite et des données cartographiques qui correspondent à la au moins une section de route cible.
